(19)

Europäisches
Patentamt
European
Patent Office
Office européen
des brevets

(11) **EP 3 866 360 A1**

(12) **EUROPEAN PATENT APPLICATION**

(43) Date of publication:
**18.08.2021  Bulletin 2021/33**

(51) Int Cl.:
***H04J 14/02*** *(2006.01)*

(21) Application number: **20315018.0**

(22) Date of filing: **11.02.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(72) Inventors:
• **Delezoide, Camille**
  **78950 Gambais (FR)**
• **Christodoulopoulos, Kostas**
  **70499 Stuttgart (DE)**
• **Zami, Thierry**
  **91300 Massy (FR)**
• **LE Monnier, Maël**
  **45480 IZY (FR)**

(71) Applicants:
• **Nokia Solutions and Networks Oy**
  **02610 Espoo (FI)**
• **Alcatel Submarine Networks**
  **91620 Nozay (FR)**

(74) Representative: **Novagraaf Technologies**
  **Bâtiment O2**
  **2, rue Sarah Bernhardt**
  **CS90017**
  **92665 Asnières-sur-Seine Cedex (FR)**

(54) **TUNING MULTIPLE LASER SOURCES IN AN OPTICAL NETWORK**

(57)    An optical network having a control plane provided with a capability to orchestrate and/or concertedly drive one or more of: signal-filter spectral alignment, inter-channel spectral alignment, and spectral corrections for multiple laser sources corresponding to different wavelength channels. In an example embodiment, the control plane includes an electronic wavelength controller configured to control small carrier-frequency corrections for a plurality of laser sources in response to the pertinent performance metrics collected from at least some of the optical receivers employed in the network. Some embodiments can be used to spectrally align an optical superchannel. Some embodiments may rely on the use of a cost function responsive to transmission performance of two or more different wavelength channels.

*FIG. 5*

500

NETWORK MANAGEMENT — 510        NETWORK TOPOLOGY — 520

— 526                    — 528  — 522

LASER-TUNING CONTROLLER — 530

$532_1$  ...  ...  $532_J$    $534_1$  ...  ...  $534_K$
$532_{11}$  $532_{12}$  $532_{J2}$    $534_{13}$  $534_{K3}$
$532_{J1}$    $534_{11}$ $534_{12}$  $534_{K1}$ $534_{K2}$

EP 3 866 360 A1

**Description**

BACKGROUND

Field

Various example embodiments relate to optical communication equipment and, more specifically but not exclusively, to tuning the output wavelengths of laser sources in an optical network.

Description of the Related Art

This section introduces aspects that may help facilitate a better understanding of the disclosure. Accordingly, the statements of this section are to be read in this light and are not to be understood as admissions about what is in the prior art or what is not in the prior art.

An optical network typically employs a relatively large number of optical transmitters and receivers. An optical transmitter typically includes a laser source that provides a carrier wavelength for the transmitted optical data signal. A coherent optical receiver employs a laser source that provides a local oscillator for detecting the received optical data signal. The output wavelengths of the various laser sources are typically required to be in good spectral alignment with the corresponding wavelength channels (e.g., represented by spectral slots) and/or each other, which can be achieved by tuning the laser sources to counteract any spontaneous detuning thereof.

SUMMARY OF SOME SPECIFIC EMBODIMENTS

Disclosed herein are various embodiments of an optical network having a control plane provided with a capability to orchestrate and/or concertedly drive one or more of: signal-filter spectral alignment, inter-channel spectral alignment, and spectral corrections for multiple laser sources corresponding to different wavelength channels. In an example embodiment, the control plane includes an electronic wavelength controller configured to control small (e.g., up to a maximum of several GHz, with increments of ca. 0.1 GHz) carrier-frequency corrections for a plurality of laser sources in response to the pertinent performance metrics collected from at least some of the optical receivers employed in the network and optionally from other suitable control or monitoring devices. Some embodiments can be used to spectrally align an optical superchannel. Some embodiments may rely on the use of a cost function responsive to transmission performance of two or more different wavelength channels.

According to an example embodiment, provided is an apparatus comprising: an electronic controller connectable to a plurality of lasers configured to generate light corresponding to a plurality of wavelength channels; and wherein the electronic controller is configured to tune the lasers to change output wavelengths thereof in response to transmission-performance feedback received from two or more optical data receivers receiving optical data signals of two or more different wavelength channels of said plurality of wavelength channels.

BRIEF DESCRIPTION OF THE DRAWINGS

Other aspects, features, and benefits of various disclosed embodiments will become more fully apparent, by way of example, from the following detailed description and the accompanying drawings, in which:

FIG. 1 shows a block diagram of an optical network in which various embodiments can be practiced;
FIG. 2 shows a block diagram of a network node that can be used in the optical network of FIG. 1 according to an example embodiment;
FIG. 3 shows a block diagram of an individual-channel optical receiver that can be used in a network node of the optical network of FIG. 1 according to an embodiment;
FIG. 4 shows a block diagram of an individual-channel optical transmitter that can be used in a network node of the optical network of FIG. 1 according to an embodiment;
FIG. 5 shows a block diagram of a control device that can be used in a network controller of the optical network of FIG. 1 according to an embodiment;
FIG. 6 graphically shows a spectral configuration of an optical superchannel according to an embodiment;
FIGs. 7A-7E graphically show an evolution of the superchannel configuration that may be produced using a multi-carrier wavelength-tuning algorithm implemented in the optical network of FIG. 1 according to an embodiment;
FIG. 8 shows a flowchart of a laser-tuning method that can be used in the optical network of FIG. 1 according to an embodiment;
FIGs. 9A-9D graphically illustrate a specific example embodiment of the laser-tuning method of FIG. 8;

FIG. 10 shows a flowchart of a laser-tuning method that can be used in the optical network of FIG. 1 according to another embodiment; and

FIG. 11 shows a flowchart of a laser-tuning method that can be used in the optical network of FIG. 1 according to yet another embodiment.

DETAILED DESCRIPTION

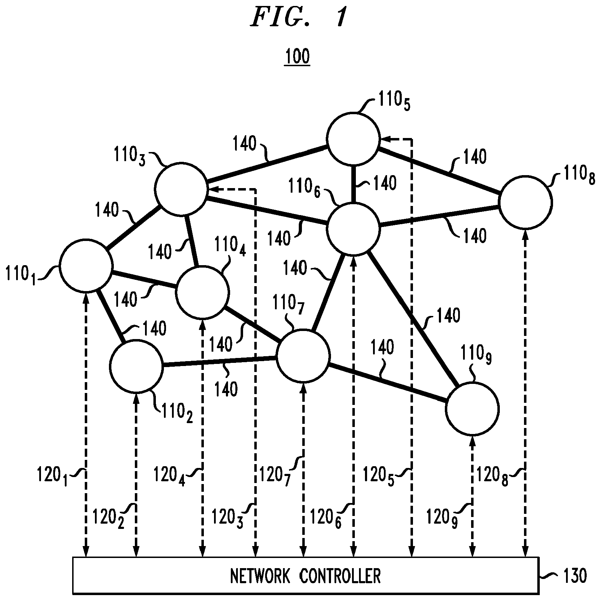

FIG. 1 shows a block diagram of an optical network 100 in which various embodiments can be practiced. Optical network 100 is illustratively shown as comprising nine nodes $110_1$-$110_9$ and a multipurpose network controller 130. Each node $110_i$ is connected to controller 130 via a corresponding control link $120_i$, where i=1, 2, ..., 9. Controller 130 uses control links 120 to perform and/or control various operations, administration and management (OAM) functions in network 100.

As known in the pertinent art, OAM functions are used, e.g., for fault indication, performance monitoring, security management, various diagnostics, network configuration, and user provisioning. One purpose of OAM tools and/or capabilities is to enable performance monitoring, adaptive reconfiguration of various pieces of equipment, and quick restoration if a failure occurs. Given that a network (such as network 100) typically comprises equipment built by different manufacturers, the OAM is also used to ensure consistency and interoperability. OAM entities, firmware, and software may use information from and provide information to other network entities. Various network entities may cooperate to support the corresponding network functions.

In an example embodiment, each of nodes $110_1$-$110_9$ can operate as an ingress node, as a relay node, and/or as an egress node. Each control link $120_i$ can be a wireline link, a wireless link, an optical link, or any combination thereof. Each optical-transport link 140 can be implemented using a suitable optical fiber or fiber-optic cable. Various links 140 may or may not include optical amplifiers. Typically, links 140 are used to transmit optical wavelength-division-multiplexed (WDM) signals.

When functioning as an ingress node, node $110_i$ operates to: (i) receive data from an external data source via a corresponding peripheral link (not explicitly shown in FIG. 1); (ii) if necessary, (re)packetize the received data; (iii) modulate a carrier wavelength (frequency) using the packetized data; and (iv) apply the resulting modulated optical signal to an appropriate one of optical-transport links 140. Suitable hardware for implementing these optical-transmitter functions in a node $110_i$ is disclosed, e.g., in U.S. Patent Nos. 7,733,929, 7,286,771, and 6,950,450, all of which are incorporated herein by reference in their entirety.

When functioning as an egress node, node $110_i$ operates to: (i) receive a modulated optical signal from a corresponding optical-transport link 140; (ii) demodulate and decode the received modulated optical signal to recover the data; and (iii) direct the recovered data to an external destination or data sink via a corresponding peripheral link (not explicitly shown in FIG. 1). Suitable hardware for implementing these optical-receiver functions in a node $110_i$ is disclosed, e.g., in U.S. Patent No. 7,965,950 and U.S. Patent Application Publication No. 2011/0229137, both of which are incorporated herein by reference in their entirety.

When functioning as a relay node, node $110_i$ operates to receive a modulated optical signal via one optical-transport link 140 and then direct this optical signal into one or more other optical-transport links 140, e.g., using a wavelength-selective switch (WSS). Suitable hardware for implementing these switching/relay functions in node $110_i$ is disclosed, e.g., in U.S. Patent Nos. 8,391,709, 8,300,995, 8,190,027, 8,126,330, 8,041,213, and 7,343,066, all of which are incorporated herein by reference in their entirety.

As known in the relevant art, a WSS can be configured to operate as a reconfigurable optical add/drop multiplexer (ROADM). The use of WSSs enables integration, in each node $110_i$, of some or all of the above-mentioned optical-transmitter, optical-receiver, and signal-relay functions.

To relay an optical signal while functioning as a relay node, node $110_i$ configures its WSS or ROADM to appropriately redirect the optical signal from one optical-transport link 140 to one or more other optical-transport links 140. The corresponding switching schedule for the WSS may be determined based on the routing schedule maintained at controller 130 and communicated to node $110_i$ via control link $120_i$.

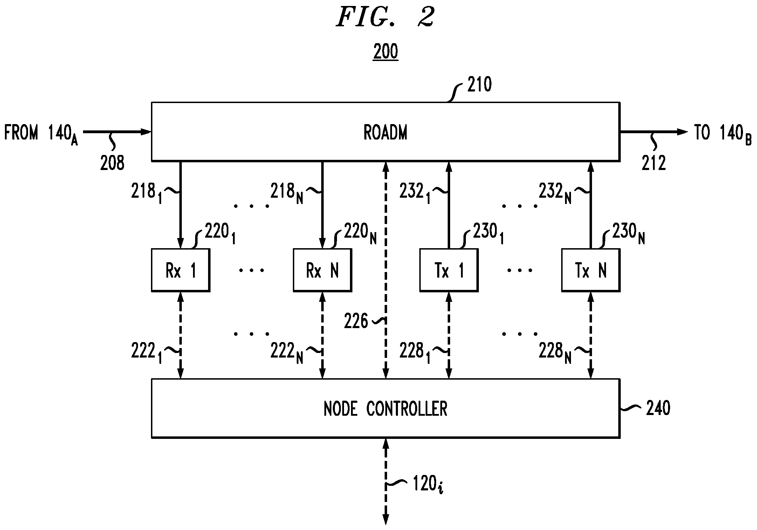

FIG. 2 shows a block diagram of a portion 200 of node $110_i$ (FIG. 1) according to an example embodiment. Portion 200 employs a ROADM 210 connected between two different corresponding links 140, which are labeled in FIG. 2 using the reference labels $140_A$ and $140_B$, respectively. A person of ordinary skill in the art will understand that several portions 200 or a higher-order ROADM may be used in a node $110_i$ connected to more than two optical-transport links 140.

Portion 200 includes optical data receivers $220_1$-$220_N$ and optical data transmitters $230_1$-$230_N$, where N is a positive integer greater than one. Each of optical data receivers $220_1$-$220_N$ is connected to a respective drop port of ROADM 210 and is configured to receive a respective optical WDM component $218_n$ of an optical WDM signal 208 applied by link $140_A$ to ROADM 210, where n=1, 2, ..., N. In an example embodiment, optical WDM components 2180 corresponding to different n have different respective carrier wavelengths $\lambda_n$. Each of optical data transmitters $230_1$-$230_N$ is connected to a respective add port of ROADM 210 and is configured to generate a respective optical WDM

component $232_n$ for an optical WDM signal **212** applied by ROADM **210** to link **140**$_B$. In an example embodiment, optical WDM components $232_n$ corresponding to different n have different respective carrier wavelengths $\lambda_n$.

In an example embodiment, node **110**$_i$ also includes a node controller **240**, which is illustratively shown in FIG. 2 as being a part of portion **200**. Node controller **240** is connected via control link **120**$_i$ to network controller **130** (also see FIG. 1). Node controller **240** is further connected via the corresponding intra-node control links to ROADM **210**, optical data receivers $220_1$-$220_N$, and optical data transmitters $230_1$-$230_N$. While each of the intra-node control links may be used to transmit different types of control signals (e.g., as known in the pertinent art), example embodiments disclosed herein may employ only a subset of said control signals.

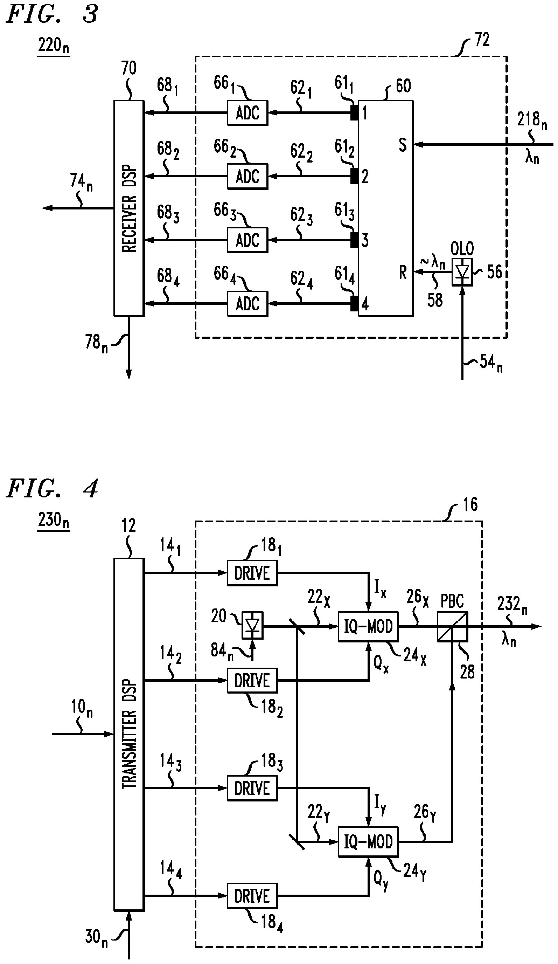

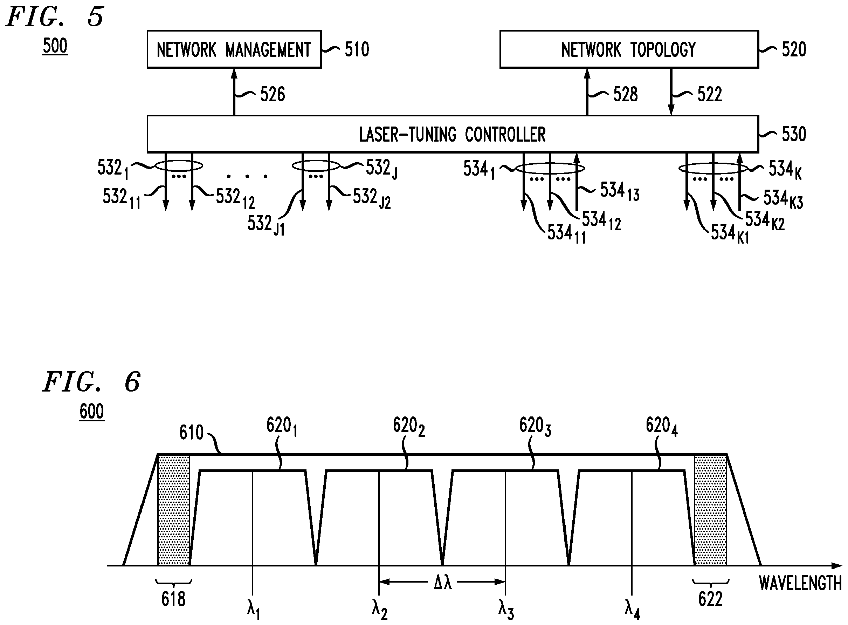

For example, intra-node control links $222_1$-$222_N$ may be used to transmit performance-monitoring data from optical data receivers $220_1$-$220_N$ to node controller **240** (and then further out to network controller **130**, FIG. 1). Intra-node control links $222_1$-$222_N$ may also be used to tune the output wavelengths of the local-oscillator sources used in optical data receivers $220_1$-$220_N$ (also see FIG. 3). Intra-node control links $228_1$-$228_N$ may be used to configure optical data transmitters $230_1$-$230_N$ to transmit optical pilot or calibration signals, e.g., for performance-monitoring purposes and in coordination, through network controller **130** (FIG. 1), with other nodes **140**. Intra-node control links $228_1$-$228_N$ may further be used to tune the output wavelengths of laser sources used in optical data transmitters $230_1$-$230_N$ (also see FIG. 4). An intra-node control link **226** may be used for switching ROADM **210** based on the applicable signal-routing schedule received from network controller **130**. In some embodiments, intra-node control link **226** may further be used to tune the pass, add, and/or drop bands of ROADM **210**. Example embodiments of some of the control functions that can be implemented using intra-node control links $222_1$-$222_N$, $228_1$-$228_N$, and **226** and network control links **120**$_i$ are described in more detail below in reference to FIGs. 5-11.

FIG. 3 shows a block diagram of an individual-channel optical receiver $220_n$ that can be used in portion **200** (FIG. 2) according to an embodiment.

A front-end circuit **72** of optical receiver $220_n$ comprises an optical hybrid **60**, light detectors $61_1$-$61_4$, analog-to-digital converters (ADCs) $66_1$-$66_4$, and an optical local-oscillator (OLO) source (e.g., laser) **56**. Optical hybrid **60** has (i) two input ports labeled S and **R** and (ii) four output ports labeled **1** through **4**. Input port **S** receives optical signal $218_n$ from ROADM **210** (also see FIG. 2). Input port **R** receives an OLO signal **58** generated by OLO source **56**. OLO signal **58** has an optical-carrier wavelength (frequency) that is sufficiently close to that of signal $218_n$ to enable coherent (e.g., homodyne or intradyne) detection of the latter signal. OLO signal **58** can be generated, e.g., using a relatively stable tunable laser whose output wavelength (frequency) can be tuned in response to a control signal $54_n$.

In an example embodiment, optical hybrid **60** operates to mix input signal **2180** and OLO signal **58** to generate different mixed (e.g., by interference) optical signals (not explicitly shown in FIG. 3). Light detectors $61_1$-$61_4$ then convert the mixed optical signals into four electrical signals $62_1$-$62_4$ that are indicative of the complex values corresponding to two orthogonal-polarization components of signal $218_n$. For example, electrical signals $62_1$ and $62_2$ may be an analog I signal and an analog Q signal, respectively, corresponding to a first (e.g., horizontal, h) polarization component of signal $218_n$. Electrical signals $62_3$ and $62_4$ may similarly be an analog I signal and an analog Q signal, respectively, corresponding to a second (e.g., vertical, v) polarization component of signal $218_n$. Note that the orientation of the h and v polarization axes at receiver $220_n$ may not coincide with the orientation of the X and Y polarization axes the corresponding remote optical transmitter.

Each of electrical signals $62_1$-$62_4$ is converted into digital form in a corresponding one of ADCs $66_1$-$66_4$. Optionally, each of electrical signals $62_1$-$62_4$ may be amplified in a corresponding electrical amplifier (not explicitly shown in FIG. 3) prior to the resulting signal being converted into digital form. Digital signals $68_1$-$68_4$ produced by ADCs $66_1$-$66_4$ are then processed by a digital signal processor (DSP) **70** to: (i) recover the data carried by signal $218_n$ for a corresponding output data stream $74_n$, and (ii) generate a control signal $78_n$ directed to controller **240** (also see FIG. 2). In an example embodiment, control signal $78_n$ may provide, e.g., performance-monitoring data (such as the signal-to-noise ratio (SNR), bit-error rate (BER), etc.) that can be generated in the process of recovering data stream $74_n$ from digital signals $68_1$-$68_4$.

In an example embodiment, control signals $78_n$ and $54_n$ may be transmitted via intra-node control link $222_n$.

In an example embodiment, DSP **70** may perform, *inter alia*, one or more of the following: (i) signal processing directed at dispersion compensation; (ii) signal processing directed at compensation of some nonlinear distortions; (iii) electronic polarization demultiplexing; (iv) error correction based on the data encoding applied at the remote data transmitter; and (v) signal processing directed at generating the pertinent performance-monitoring data for controllers **240** and **130**.

FIG. 4 shows a block diagram of an individual-channel optical transmitter $230_n$ that can be used in portion **200** (FIG. 2) according to an embodiment.

In operation, transmitter $230_n$ may receive an input data stream $10_n$. A DSP **12** processes input data stream $10_n$ to generate digital signals $14_1$-$14_4$. In an example embodiment, DSP **12** may perform, *inter alia*, one or more of the following: (i) demultiplex input data stream **100** into two sub-streams, each intended for optical transmission using a respective one of orthogonal (e.g., X and Y) polarizations of an optical output signal $232_n$; (ii) encode each of the sub-streams using a suitable code, e.g., to prevent error propagation and enable error correction at the corresponding remote data receiver; (iii) convert each of the two resulting sub-streams into a corresponding sequence of constellation symbols; and (iv) perform digital signal pre-distortion, e.g., to mitigate the adverse effects imposed by an electrical-to-optical (E/O) converter (also sometimes referred to as a front-end circuit) **16** of transmitter **230$_n$**, optical-transport link **140**, and/or a front-end circuit of the corresponding remote optical receiver (e.g., see **72**, FIG. 3). In each signaling interval (also referred to as a symbol period or time slot), signals **14$_1$** and **14$_2$** may carry digital values that represent the in-phase (I) component and quadrature (Q) component, respectively, of a corresponding (possibly pre-distorted) constellation symbol intended for transmission using a first (e.g., X) polarization of light. Signals **14$_3$** and **14$_4$** similarly carry digital values that represent the I and Q components, respectively, of the corresponding (possibly pre-distorted) constellation symbol intended for transmission using a second (e.g., Y) polarization of light.

E/O converter **16** operates to transform digital signals **14$_1$**-**14$_4$** into a corresponding modulated optical output signal **232$_n$**. More specifically, drive circuits **18$_1$** and **18$_2$** transform digital signals **14$_1$** and **14$_2$**, as known in the art, into electrical analog drive signals $I_X$ and $Q_X$, respectively. Drive signals $I_X$ and $Q_X$ are then used, in a conventional manner, to drive an I-Q modulator **24$_X$**. In response to drive signals $I_X$ and $Q_X$, I-Q modulator **24$_X$** operates to modulate an X-polarized beam **22$_X$** of light supplied by a laser source **20** as indicated in FIG. 4, thereby generating a modulated optical signal **26$_X$**. Drive circuits **18$_3$** and **18$_4$** similarly transform digital signals **14$_3$** and **14$_4$** into electrical analog drive signals $I_Y$ and $Q_Y$, respectively. In response to drive signals $I_Y$ and $Q_Y$, an I-Q modulator **24$_Y$** operates to modulate a Y-polarized beam **22$_Y$** of light supplied by laser source **20** as indicated in FIG. 4, thereby generating a modulated optical signal **26$_Y$**. A polarization beam combiner **28** operates to combine modulated optical signals **26$_X$** and **26$_Y$**, thereby generating optical output signal **232$_n$**.

The output wavelength $\lambda_n$ of laser source **20** can be set and/or changed in response to a control signal **84$_n$** received via intra-node control link **228$_n$** from controller **240** (also see FIG. 2). A control signal **30$_n$** can be used to configure DSP **12** to generate digital signals **14$_1$**-**14$_4$** using pilot and/or calibration data sequences instead of the payload data normally provided by input data stream **10$_n$**. Similar to control signal **84$_n$**, control signal **30$_n$** can be received via intra-node control link **228$_n$** from controller **240**.

Referring back to FIGs. 1-2, modern optical networks, such as network **100**, tend to have a relatively large number of optical WDM channels that are relatively densely packed in the spectral dimension. As a result, the WSSs/ROADMs used in various network nodes, such as nodes **110**, may be configured to have relatively narrow spectral bands for individual WDM channels. The latter characteristic may result in a relatively high filtering penalty for at least some WDM channels. Due to the cascade effect of multiple WSSs traversed by an optical data signal and/or due to the relative signal-filter detuning, such penalties may impose a disadvantageously low reach limit on some WDM channels. In addition to the filtering penalty, some optical signals transmitted in network **100** may suffer from inter-channel interference, e.g., when two channels are spectrally too close to one another. Inter-channel interference may be significant, e.g., in a superchannel configuration or when two spectrally adjacent channels cross a network node in the same direction.

These and possibly some related problems in the state of the art can be addressed, e.g., using at least some embodiments disclosed herein. In an example embodiment, the control plane of optical network **100** is provided with capabilities to concertedly drive the signal-filter spectral alignment, inter-channel spectral alignment, and/or spectral corrections for multiple laser sources corresponding to different wavelength channels. For example, some embodiments may provide one or more of the following features:

(1) a control-plane device or programmable module configurable to control small (e.g., up to a maximum of several GHz, with increments of ca. 0.1 GHz) carrier-frequency corrections/changes for a plurality of laser sources (e.g., **20**, **56**, see FIGs. 3-4) employed in optical network **100**;

(2) a capability to collect the pertinent performance metrics from some or all of the optical receivers (e.g., **220**) employed in optical network **100** and then use the collected metrics to direct and coordinate the wavelength-tuning processes for a plurality of laser sources, e.g., to implement an optimized set of corrections according to inter-channel dependencies;

(3) a capability to generate, receive, process, and propagate specific alarms responsive to the detuning, filtering-loss, and/or crosstalk thresholds being exceeded, e.g., to inform the control plane of optical network **100** about potential or imminent outages; and

(4) a capability to prepare various wavelength channels to safely undergo a network reconfiguration, e.g., by adequately adjusting the corresponding carrier frequencies (wavelengths) in a manner that significantly reduces (e.g., substantially nulls) the probability of reconfiguration-related outages in optical network **100**.

FIG. 5 shows a block diagram of a control device **500** that can be used in network controller **130** (FIG. 1) according to an embodiment. Control device **500** comprises a laser-tuning controller **530** operatively connected to a network-management entity **510** and a network-topology database **520**, e.g., as indicated in FIG. 5. In some embodiments, some parts of one or both of network-management entity **510** and network-topology database **520** may be implemented using devices and/or systems that are external to network controller **130**. In some embodiments, some parts of laser-tuning controller **530** can be implemented using one or more software modules configured to run in the optical management system (OMS) of optical network **100**.

In an example embodiment, controller **530** is capable of retrieving the pertinent network-topology and connectivity information, e.g., by sending a corresponding query **528** to database **520** and then receiving a corresponding answer **522**. The received network-topology and connectivity information can then be used to appropriately orchestrate the carrier wavelength (frequency) adjustments for a plurality of laser sources (e.g., **20**, **56**, FIGs. 3-4) employed in optical network **100**. For some network configurations, the received network-topology and connectivity information can be used by controller **530** to divide the entirety of optical data receivers **220** and optical data transmitters **230** into two or more non-overlapping subsets, each of which lends itself to a concerted laser-tuning process that is substantially independent of the laser-tuning processes carried out in the other subsets.

In an example embodiment, controller **530** can direct the tuning of a laser source **20** (see FIG. 4) using a corresponding control link **120$_i$** (FIG. 1), a corresponding node controller **240** (FIG. 2), and a corresponding intra-node control link **228** (FIG. 2). For example, controller **530** may be configured to generate and/or receive a plurality **532$_j$** of control signals transmitted by way of the corresponding control link **120$_i$** to/from the corresponding node controller **240**, where j (=1, ..., J) is a network-wide index, different values of which point at different optical transmitters **230** in optical network **100**. As an example, FIG. 5 explicitly shows only two control signals for each plurality **532$_j$**, which two control signals are labeled in FIG. 5 as **532$_{j1}$** and **532$_{j2}$**, respectively. A person of ordinary skill in the art will understand that each plurality **532$_j$** may contain one or more additional control signals, including one or more control signals that are received by controller **530** from the corresponding node controller **240** via the corresponding control link **120$_i$**.

In an example embodiment, control signal **532$_{j1}$** can be used to turn ON or OFF a self-tuning mechanism of optical transmitter **230$_j$**. Such self-tuning mechanisms are known in the pertinent art and are typically directed at reducing the detrimental effects of spontaneous detuning of an individual laser source 20 without taking into account other laser sources in the network. Some self-tuning mechanisms may be based on a feedback signal received from a remote data receiver to which optical transmitter **230$_j$** is transmitting data.

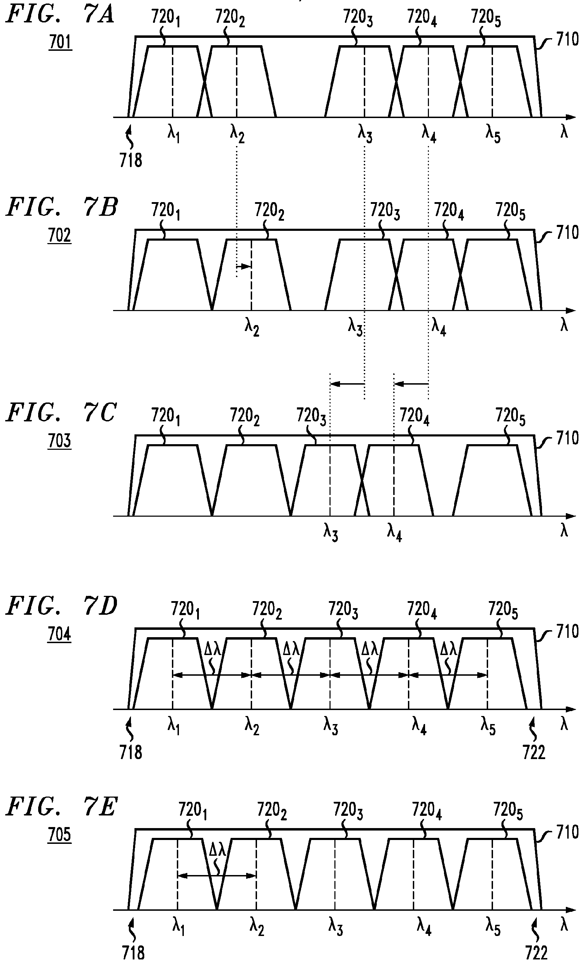

In an example embodiment, control signal **532$_{j2}$** can be used to configure the corresponding node controller **240** to generate an appropriate control signal **84$_n$** (see FIG. 4) for the laser source **20** of optical transmitter **230$_j$**. In particular, control signal **532$_{j2}$** may be used to provide the corresponding node controller **240** with a carrier-wavelength (frequency) adjustment value determined by controller **530** using a corresponding multi-carrier wavelength-tuning algorithm implemented thereat (see, e.g., FIGs. 7-11 and the corresponding description below).

In an example embodiment, controller **530** can direct the tuning of a laser source **56** (see FIG. 3) using a corresponding control link **120$_i$** (FIG. 1), a corresponding node controller **240** (FIG. 2), and a corresponding intra-node control link **222** (FIG. 2). For example, controller **530** may be configured to generate and/or receive a plurality **534$_k$** of control signals transmitted by way of the corresponding control link **120$_i$** to/from the corresponding node controller **240**, where k (=1, ..., K) is a network-wide index, different values of which point at different optical receivers **220** in optical network **100**. As an example, FIG. 5 explicitly shows only three control signals for each plurality **534$_k$**, which three control signals are labeled in FIG. 5 as **534$_{k1}$**, **534$_{k2}$**, and **534$_{k3}$**, respectively. A person of ordinary skill in the art will understand that each plurality **534$_k$** may contain one or more additional control signals transmitted and/or received by controller **530** via the corresponding control link **120$_i$**.

In an example embodiment, control signal **534$_{k1}$** can be used to turn ON or OFF a self-tuning mechanism of optical receiver **220$_k$**. Such self-tuning mechanisms are known in the pertinent art and are typically directed at reducing the detrimental effects of spontaneous detuning of an individual laser source 56 without explicitly taking into account other laser sources in the network.

In an example embodiment, control signal **534$_{k2}$** can be used to configure the corresponding node controller **240** to generate an appropriate control signal **54$_n$** (see FIG. 3) for the laser source **56** of optical receiver **220$_k$**. For example, control signal **534$_{k2}$** may be used to provide the corresponding node controller **240** with a carrier-wavelength (frequency) adjustment value determined by controller **530** using a corresponding multi-carrier wavelength-tuning algorithm implemented thereat (see, e.g., FIGs. 7-11 and the corresponding description below).

In an example embodiment, control signal **534$_{k3}$** can be used to provide controller **530** with the pertinent performance metrics from optical receiver **220$_k$**, by way of the corresponding node controller **240**. Controller **530** can then use the performance metrics collected from different optical receivers **220$_k$** as inputs to the corresponding multi-carrier wavelength-tuning algorithm implemented at said controller (see, e.g., FIGs. 7-11 and the corresponding description below). Controller **530** can also be configured to process the performance metrics collected from different optical receivers **220$_k$** and then use the processing results to generate an alarm signal **526** for network-management entity **510**. As already indicated above, an alarm signal, such as alarm signal **526**, can be used to inform the control plane of optical network **100** about potential or imminent outages.

In an example embodiment, control device **500** may support some or all of the following features:

(A) a capability to access specific monitoring data gathered from a plurality of network nodes $110_i$. An auxiliary feature related to this capability is a capability of receiver DSPs **70** (FIG. 3) and/or node controllers **240** (FIG. 2) to compute and compile the monitoring data suitable for use in a multi-carrier wavelength-tuning algorithm implemented at controller **530**;

(B) a capability to receive specific alarms (e.g., as part of performance-monitoring data) from a plurality of network nodes $110_i$. An auxiliary feature related to this capability is a capability of receiver DSPs **70** (FIG. 3) and/or node controllers **240** (FIG. 2) to generate such alarms, e.g., to flag unexpected crosstalk and/or filter issues;

(C) a capability to process specific performance-monitoring data gathered from a plurality of network nodes $110_i$ and determine carrier-wavelength corrections to remedy unwanted deviations of the observed performance characteristics from the corresponding target performance characteristics;

(D) a capability to concertedly drive carrier-wavelength (frequency) corrections for a plurality of laser sources **20** and **56**. An auxiliary feature related to this capability is a fine-tuning functionality of the employed laser sources, which enables relatively precise tuning of the optical carrier within a specified spectral interval, e.g., within $\pm 6.5$ GHz with respect to the nominal carrier frequency;

(E) a capability to selectively engage and disengage a local channel-optimization mechanism, which is typically installed in some shape or form at an optical transponder. In some embodiments, this particular capability may benefit from a capability to selectively modify, e.g., transponder by transponder, some or all parameters of the local channel-optimization algorithms; and

(F) a capability to access the comprehensive network-topology and network-configuration data to determine which groups of channels are likely to exhibit relatively significant inter-channel interactions, e.g., in the form of linear crosstalk.

Some embodiments of a multi-carrier wavelength-tuning algorithm implemented at controller **530** may be directed at optimizing the configuration of an optical super-channel (or optical superchannel).

As used herein, the term "optical superchannel" refers to an optical channel having a relatively large bandwidth sufficient for accommodating therein multiple modulated optical carriers or subcarriers for unified routing and transmission. The superchannel technology can be considered as an evolution in dense WDM (DWDM) in which multiple modulated optical carriers are combined to create a unified channel of a higher data rate, and which is brought into service in a single operational cycle. Using the flexible-grid technology, the superchannel can improve the spectral efficiency, increase the system transmission capacity, and reduce the penalty associated with a cascade of filters (e.g., WSSs, ROADMs, etc).

Example flexible grids that can be used in some embodiments are described, e.g., in Recommendation ITU-T G.694.1 (02/2012), which is incorporated herein by reference in its entirety.

FIG. 6 graphically shows a desired spectral configuration **600** of an optical superchannel according to an embodiment. For illustration purposes and without any implied limitations, the superchannel of FIG. 6 is shown to have four modulated optical carriers. A person of ordinary skill in the art will understand that, in alternative embodiments, a superchannel may have a different number of modulated optical carriers, e.g., in the range from two to sixty-four (also see FIGs. 7A-7E).

Curve **610** in FIG. 6 graphically shows an approximate filter function to which superchannel **600** may be subjected by one or more ROADMs **210**. Filter function **610** has sufficient bandwidth to accommodate four modulated optical carriers, the spectral envelopes of which are indicated by curves $620_1$-$620_4$, respectively. Each of the carrier wavelengths $\lambda_1$-$\lambda_4$ is typically located near the center wavelength of the corresponding spectral envelope, as indicated in FIG. 6. In a desired spectral configuration of superchannel **600**, carrier wavelengths $\lambda_1$-$\lambda_4$ are approximately equidistant from one another, with the distance $\Delta\lambda$ being such as to make the overlap of neighboring spectral envelopes **620** relatively or negligibly small. A person of ordinary skill in the art will understand that the amount of overlap between neighboring spectral envelopes **620** is related to inter-channel crosstalk.

Spectral envelopes $620_1$-$620_4$ are also spectrally aligned with respect to filter function **610** such as to have sufficient guard bands **618** and **622** to minimize or avoid an excessive filtering penalty. As known in the pertinent art, a guard band is an idle spectral band located outside an edge wavelength channel. For example, guard band **618** is located at shorter wavelengths outside spectral envelope $620_1$ and has a sufficient spectral width to make the filtering penalty to the $\lambda_1$ channel relatively small. Similarly, guard band 622 is located at longer wavelengths outside spectral envelope $620_4$ and has a sufficient spectral width make the filtering penalty to the $\lambda_4$ channel relatively small. A person of ordinary skill in the pertinent art will understand that spectral widths of guard bands **618** and **622** may depend on the modulation format.

FIGs. 7A-7E graphically show an evolution of the superchannel configuration that may be produced during an example run of a multi-carrier wavelength-tuning algorithm implemented at controller **530** according to an embodiment. The superchannel graphically illustrated in FIGs. 7A-7E has five modulated optical carriers. The corresponding spectral envelopes are labeled $720_1$-$720_5$. The corresponding carrier wavelengths are labeled $\lambda_1$-$\lambda_5$. The corresponding filter

function is labeled **710**.

FIG. 7E graphically shows a desired superchannel configuration 705 toward which an example embodiment of the multi-carrier wavelength-tuning algorithm is designed to drive this particular superchannel. Configuration **705** is qualitatively similar to configuration **600** (FIG. 6). In particular, carrier wavelengths $\lambda_1$-$\lambda_5$ are equidistantly spaced, with the wavelength increment $\Delta\lambda$ being such as to minimize the overlap between the neighboring spectral envelopes **720**. There are also sufficient guard bands **718** and **722** to minimize or avoid a filtering penalty to the $\lambda_1$ and $\lambda_5$ channels.

In some embodiments, a desired superchannel configuration may be such that some spectral envelopes and/or some carrier wavelengths are not relatively spectrally equidistant therein. In such embodiments, controller **130** may be appropriately programmed to drive the multi-carrier wavelength-tuning algorithm toward the corresponding configuration.

FIG. 7A graphically shows an example initial superchannel configuration **701** from which the multi-carrier wavelength-tuning algorithm may start to drive the superchannel toward configuration **705**. In particular, configuration **701** exhibits the following detrimental features: (i) relatively large overlaps in some spectral-envelope pairs, e.g., **(720$_1$** and **720$_2$), (720$_3$** and **720$_4$),** and **(720$_4$** and **720$_5$),** which result in the corresponding relatively high levels of inter-channel crosstalk; (ii) insufficient guard band **718**, which results in a larger filtering penalty to the $\lambda_1$ channel; (iii) irregular pairwise spacing between some of carrier wavelengths $\lambda_1$-$\lambda_5$, which results, e.g., in an undesired idle band between the $\lambda_2$ and $\lambda_3$ channels and the corresponding suboptimal use of the superchannel bandwidth.

FIG. 7B graphically shows a first intermediate superchannel configuration 702 into which the multi-carrier wavelength-tuning algorithm may transform configuration **701**. During this particular transformation, the carrier wavelength $\lambda_2$ is increased to significantly reduce or eliminate the overlap between spectral envelopes **720$_1$** and **720$_2$**, which reduces the inter-channel crosstalk between the $\lambda_1$ and $\lambda_2$ channels accordingly.

FIG. 7C graphically shows a second intermediate superchannel configuration **703** into which the multi-carrier wavelength-tuning algorithm may transform configuration **702**. During this particular transformation, the carrier wavelengths $\lambda_3$ and $\lambda_4$ are decreased by equal amounts to close up the idle band between the $\lambda_2$ and $\lambda_3$ channels while making sure that the level of crosstalk therebetween remains acceptably low. This transformation also eliminates the overlap between spectral envelopes **720$_4$** and **720$_5$,** which reduces the inter-channel crosstalk between the $\lambda_4$ and $\lambda_5$ channels accordingly.

FIG. 7D graphically shows a third intermediate superchannel configuration **704** into which the multi-carrier wavelength-tuning algorithm may transform configuration **703**. During this particular transformation, the carrier wavelengths $\lambda_1$-$\lambda_4$ are changed by different respective amounts to make the carrier wavelengths $\lambda_1$-$\lambda_5$ relatively equidistant and also such that neighboring carrier wavelengths differ by a constant $\Delta\lambda$ (also see FIG. 7E). Depending on the specifics, some or all carrier wavelengths may be increased and/or some or all carrier wavelengths may be decreased. Note also that, in configuration **704**, guard band **718** is narrower than guard band **722**, which may result in a higher filtering penalty for the $\lambda_1$ channel.

Finally, the multi-carrier wavelength-tuning algorithm transforms configuration **704** into configuration **705** by increasing the carrier wavelengths $\lambda_1$-$\lambda_5$ by equal amounts, e.g., to substantially center the sequence of wavelength channels within the filter function **710**, thereby causing guard bands **718** and **722** to have substantially equal spectral widths.

In an example embodiment, the multi-carrier wavelength-tuning algorithm illustrated by FIGs. 7A-7E can be implemented using threshold-based detection of linear crosstalk between adjacent wavelength channels. For example, the corresponding algorithm can be designed to move adjacent channels as close to one another as possible within the filter function while keeping the inter-channel crosstalk below a fixed threshold. In some embodiments, such an algorithm can be implemented without the use of a multidimensional cost function. In such embodiments, the algorithm may advantageously lend itself to relatively straightforward scalability, thereby making it suitable for tuning any practical number of wavelength channels.

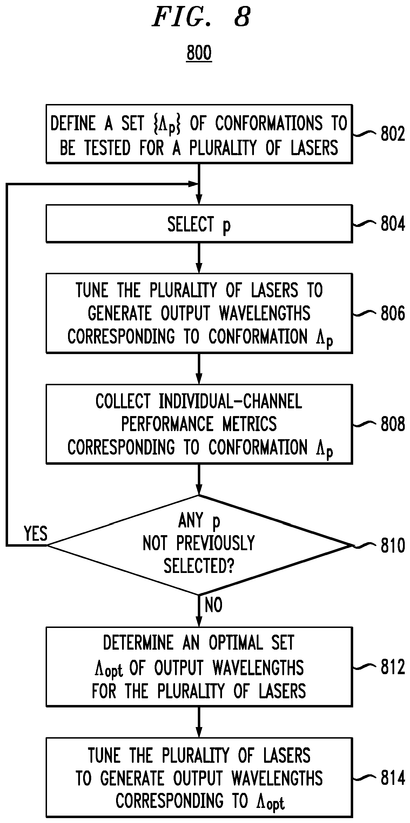

FIG. 8 shows a flowchart of a laser-tuning method **800** that can be used in network **100** (FIG. 1) according to an embodiment. Different embodiments of method **800** may be applied to a superchannel (see, e.g., FIGs. 7A-7E) and/or a plurality of different independent WDM channels. Depending on the specific details of the equipment used in network **100**, an embodiment of method **800** may be used to tune: (i) only transmitter lasers (e.g., **20**, FIG. 4); (ii) only coherent-receiver lasers (e.g., **56**, FIG. 3); or (iii) both transmitter and receiver lasers.

In an example embodiment, method **800** may be used to tune M lasers, where M is an integer greater than one. The output wavelengths of said M lasers are denoted herein as $\lambda_m$, where m = 1, ..., M. In mathematical terms, the wavelengths $\lambda_1$-$\lambda_M$ define an M-dimensional parameter space. Herein, the term "conformation" refers to a point in said M-dimensional parameter space. For example, a conformation $\Lambda_p$ in said M-dimensional parameter space can be uniquely identified by the corresponding set of M coordinates, i.e., $\Lambda_p=(\lambda_{1,p}, \lambda_{2,p}, ..., \lambda_{M,p})$, where $\lambda_{1,p}$ is a specific value of wavelength $\lambda_1$; $\lambda_{2,p}$ is a specific value of wavelength $\lambda_2$; and $\lambda_{M,p}$ is a specific value of wavelength $\lambda_M$.

At step **802** of method **800**, controller **530** operates to define a set $\{\Lambda_p\}$ of conformations $\Lambda_p$ containing P distinct conformations, where P is a positive integer greater than one, and p = 1, ..., P. As used herein, the term "distinct conformation" refers to a conformation $\Lambda_p$ that differs from any other conformation from the set $\{\Lambda_p\}$ by at least one coordinate value. In an example embodiment, P may be approximately $10^M$, e.g., such that every coordinate can take about ten different values.

In an example embodiment, step **802** can be configured to determine the set $\{\Lambda_p\}$ using one or more of the following: (i) pertinent information retrieved from network-topology and connectivity database **520**, e.g., as explained above; (ii) pertinent information about the applicable filter function(s), e.g., **610**, FIG. 6; (iii) desired granularity with which the above-mentioned M-dimensional parameter space is to be sampled; and (iv) any other applicable practical considerations, such as the processing power available to controller **530**.

At step **804**, controller **530** selects a p value. The initial p value selected in the first instance of step **804** can be any value from 1 to P. In any subsequent instances of step **804**, any previously selected values of p are ineligible for selection, and the selection is made from the subset of values that were not previously selected.

At step **806**, controller **530** operates to generate appropriate control signals **532** and/or **534** to cause the M lasers to tune to the wavelengths $\lambda_{1,p}$, $\lambda_{2,p}$, ..., $\lambda_{M,p}$, respectively.

At step **808**, controller **530** operates to receive control signals **534$_{k3}$** from the pertinent receivers **220$_k$**, which provide the performance metrics corresponding to the conformation $\Lambda_p$. The collected performance metrics are then temporarily stored in the memory of controller **530**, e.g., for further use at step **812**.

At step **810**, controller **530** operates to determine whether or not there are any p values that were not previously selected. If there are any such p values, then the processing of method **800** is directed back to step **804**. Otherwise, the processing of method **800** is directed to step **812**.

At step **812**, controller **530** operates to find an optimal $\Lambda_p$ (hereafter denoted as $\Lambda_{opt}$) using a pertinent cost-function $Q(\Lambda)$ computed and/or evaluated over the set $\{\Lambda_p\}$. In an example embodiment, the cost function $Q(\Lambda)$ can be computed and/or evaluated based on the performance metrics collected using the various instances of step **808** of the processing loop **804-810**. In some embodiments, suitable interpolation and/or extrapolation techniques can be used to find an optimal A that does not belong to the set $\{\Lambda_p\}$.

The term "cost function" is used herein in the sense commonly associated with this term in the mathematical optimization and decision theory. For example, a cost function can be a function that maps a set of values (e.g., the set of performance metrics received at step **808**) onto a real number that represents some systemic "cost" associated with said set of values. An optimization problem typically seeks to optimize (e.g., minimize or maximize) the cost function. The corresponding "optimal solution" can then be used to determine an optimal set of configuration parameters (e.g., $\Lambda_{opt}$), which can be used in the corresponding system or process to achieve nearly optimal results.

Different embodiments may use different types of the cost function $Q(\Lambda)$. For example, a cost function $Q(\Lambda)$ can be constructed to take into account (e.g., balance in some manner the requirements corresponding to) two or more of the following objectives:

(i) to achieve nearly maximum individual SNRs for one or more wavelength channels;
(ii) to achieve nearly minimum individual BERs for one or more wavelength channels;
(iii) to achieve a nearly minimum combined BER for a superchannel;
(iv) to limit the maximum individual-channel BER observed within a set of wavelength channels;
(v) to obtain an optimal set of specific performance margins for a set of wavelength channels;
(vi) to keep pairwise inter-channel crosstalk levels below a specific threshold for a set of wavelength channels; and
(vii) to keep the filtering penalties below a specific threshold for a set of wavelength channels. In some embodiments, a cost function $Q(\Lambda)$ can be constructed using a single objective.

For example, in some embodiments, step **812** can be implemented as follows.

Suppose that $S_m$ denotes the SNR (on a logarithmic scale) corresponding to the m-th individual wavelength channel. Typically, $S_m$ depends on the overall system configuration in general and on $\Lambda_p$ in particular. For the purposes of this example, let $S_m$ be $S_m(\Lambda)$. We then define a set of SNR margins $\delta_m$ as follows:

$$\delta_m(\Lambda) = S_m(\Lambda) - S_0 \qquad (1)$$

where $S_0$ is a threshold value. In an example embodiment, $S_0$ can be a critical (e.g., minimum) SNR for error-free transmission with the use of an operative forward-error-correction (FEC) code.

Then, in one example embodiment of step **812**, $\Lambda_{opt}$ can be determined using the following equation:

$$\Lambda_{opt} = \arg\max_{\{\Lambda_p\}}\left(\min_{1 \le m \le M}\left[\delta_m(\Lambda_p)\right]\right) \qquad (2)$$

A person of ordinary skill in the art will understand that Eq. (2) causes $\Lambda_{opt}$ to be the $\Lambda_p$ corresponding to the maximum value of the minimum SNR margin among the M wavelength channels whose lasers are being tuned using method **800**.

In another example embodiment of step **812**, $\Lambda_{opt}$ can be determined using the following equation:

$$\Lambda_{opt} = \underset{\{\Lambda_p\}}{\arg\min}\left(\sum_{m1 \neq m2}\left[\delta_{m1}(\Lambda_p) - \delta_{m2}(\Lambda_p)\right]^2\right) \qquad (3)$$

A person of ordinary skill in the art will understand that Eq. (3) tends to result in graphically that causes the M wavelength channels whose lasers are being tuned using method **800** to have very similar (e.g., substantially identical) SNR margins.

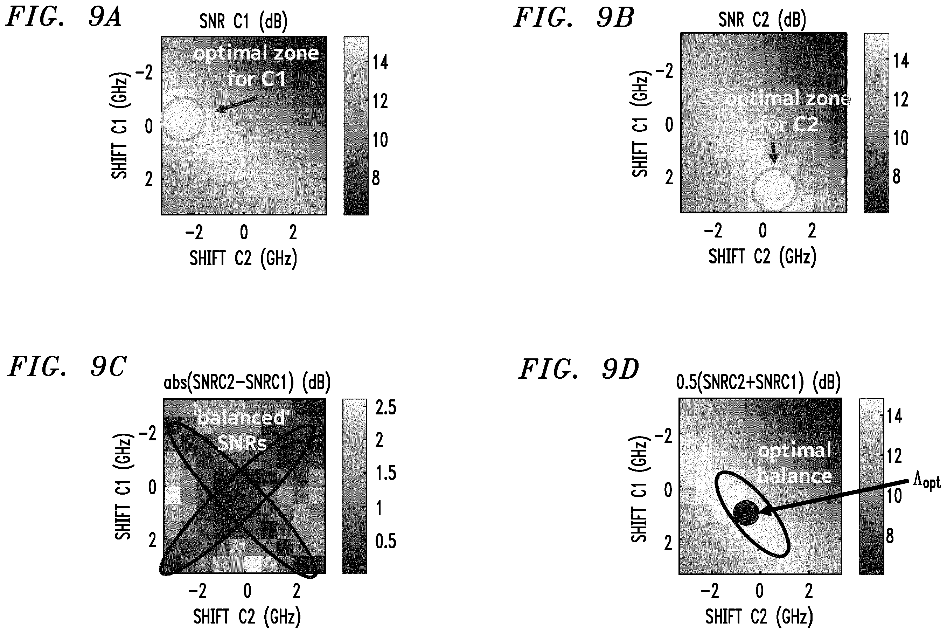

An additional example embodiment of step **812** is described below in reference to FIGs. 9A-9D.

At step **814**, controller **530** operates to generate appropriate control signals **532** and/or **534** to cause the M lasers to tune to the wavelengths corresponding to $\Lambda_{opt}$ determined at step **812**.

FIGs. 9A-9D graphically illustrate a specific example embodiment of method **800** (FIG. 8). In this specific example, M=2. Both of the lasers that are being tuned are transmitter lasers, e.g., **20**, FIG. 4. The corresponding wavelength channels are labeled **C1** and **C2**, respectively. The channels **C1** and **C2** form a superchannel and share the same filter function (e.g., analogous to **610**, FIG. 6) having a spectral width of 75 GHz. The number P is set to one hundred, which causes method **800** to sample one hundred conformations. The SNR data collected at the corresponding one hundred instances of step **808** are presented in the frequency space. A person of ordinary skill in the art will understand how to interconvert the frequency and wavelength units and that both of these units can be used to characterize an optical carrier. In each of FIGs. 9A-9D, the vertical axis corresponds to channel **C1,** and the horizontal axis corresponds to channel **C2**. The origin of each axis corresponds to the respective nominal carrier frequency. The range of carrier frequencies that are being sampled for each optical carrier is from -3 GHz to +3 GHz with respect to the nominal carrier frequency. The frequency granularity is therefore 0.6 GHz in each of the two dimensions. Each of the corresponding squares in the shown SNR data represents one conformation $\Lambda_p$. The side bar in each of FIGs. 9A-9D provides the respective key used for color (or grey-scale) coding the SNR data presented therein.

FIG. 9A graphically shows the SNR data collected at the corresponding 100 instances of step **808** for channel **C1**. The frequency subspace corresponding to nearly maximum SNR values is indicated in FIG. 9A as "optimal zone for C1."

FIG. 9B graphically shows the SNR data collected at the corresponding 100 instances of step **808** for channel **C2**. The frequency subspace corresponding to nearly maximum SNR values is indicated in FIG. 9B as "optimal zone for C2."

In this particular embodiment, the cost-function Q(Λ) is implemented using the functions $F_1(\Lambda)$ and $F_2(\Lambda)$ expressed as follows:

$$F_1(\Lambda) = \left|S_1 - S_2\right| \qquad (4)$$

$$F_2(\Lambda) = \frac{S_1 + S_2}{2} \qquad (5)$$

where $S_1$ is the SNR corresponding to channel **C1**; and $S_2$ is the SNR corresponding to channel **C2**. More specifically, optimal conformation $\Lambda_{opt}$ is defined as a conformation $\Lambda_p$ that approximately maximizes $F_2(\Lambda)$ while approximately minimizing $F_1(\Lambda)$.

FIG. 9C graphically shows the function $F_1(\Lambda)$ computed at step **812** using the SNR data of FIGs. 9A and 9B. The area corresponding to nearly minimum values of $F_1(\Lambda)$ is indicated in FIG. 9C as "balanced SNRs."

FIG. 9D graphically shows the function $F_2(\Lambda)$ computed at step **812** using the SNR data of FIGs. 9A and 9B. The area corresponding to nearly maximum values of $F_2(\Lambda)$ is indicated in FIG. 9D as "optimal balance." Within the intersection of the "balanced SNRs" area of FIG. 9C and the "optimal balance" area of FIG. 9D, the processing of step **812** identifies $\Lambda_{opt}$, which is pointed out in FIG. 9D by the arrow labeled "$\Lambda_{opt}$".

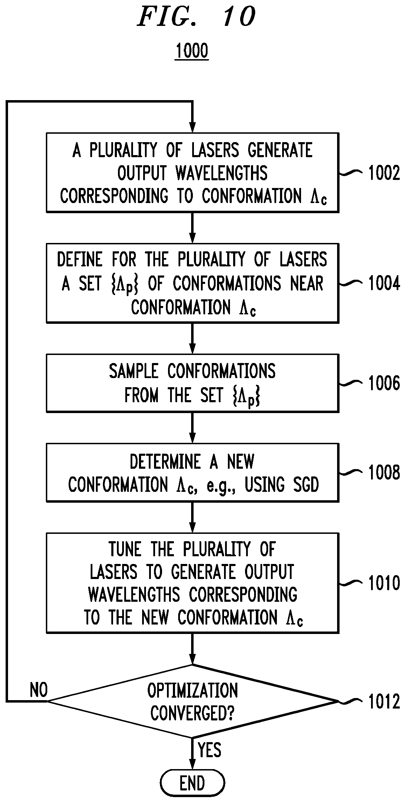

FIG. 10 shows a flowchart of a laser-tuning method **1000** that can be used in network **100** (FIG. 1) according to another embodiment. Different embodiments of method **1000** may be applied to a superchannel (see, e.g., FIGs. 7A-7E) and/or a plurality of different independent WDM channels. Depending on the specific details of the equipment used in network **100**, an embodiment of method **1000** may be used to tune: (i) only transmitter lasers (e.g., **20**, FIG. 4); (ii) only coherent-receiver lasers (e.g., **56**, FIG. 3); or (iii) both transmitter and receiver lasers.

Method **1000** is configured to use an iterative procedure that enables this method to be practically suitable for a larger M value than method **800**. For example, in some other embodiments, $2 \leq M \leq 16$. In yet some other embodiments, the upper limit on M may not be applicable.

At step **1002** of method **1000**, the M lasers that are to be tuned have the output wavelengths corresponding to conformation $\Lambda_c$. Hereafter, conformation $\Lambda_c$ is referred to as the "current conformation." As explained below, conformation $\Lambda_c$ can be iteratively changed in the course of method **1000**. For example, at the initiation of method **1000**, conformation $\Lambda_c$ is the initial (e.g., suboptimal) conformation $\Lambda_0$. At the conclusion of method **1000**, conformation $\Lambda_c$ is approximately an optimal conformation, $\Lambda_{opt}$.

At step **1004**, controller **530** operates to define a set $\{\Lambda_p\}$ of conformations $\Lambda_p$ containing P distinct conformations in relatively close proximity to conformation $\Lambda_c$. As used herein, the term "close proximity" means, e.g., that the Euclidean distance between conformation $\Lambda_c$ and any of the conformations $\Lambda_p$ is smaller than a fixed threshold value. For example, the fixed threshold value can be much smaller than the Euclidean distance between the conformations $\Lambda_0$ and $\Lambda_{opt}$.

At step **1006**, controller **530** operates to sample each of the conformations of the set $\{\Lambda_p\}$ defined at step **1004**. In an example embodiment, step **1006** can be implemented using a processing loop that is qualitatively similar to processing loop **804-810** of method **800** (FIG. 8).

At step **1008**, controller **530** operates to determine a next current conformation $\Lambda_c$ using the pertinent cost-function $Q(\Lambda)$ computed and evaluated over the set $\{\Lambda_p\}$ based on the performance metrics collected during step **1006**. In an example embodiment, suitable interpolation and/or extrapolation techniques can be used to find the next current conformation $\Lambda_c$. In some embodiments, the cost function for method **1000** can be defined using some or all of the objectives mentioned in the description of method **800**.

In an example embodiment, step **1008** can be implemented using the following example sub-steps: (i) computing cost-function $Q(\Lambda)$ over the set $\{\Lambda_p\}$ based on the performance metrics collected during step **1006**; (ii) determine the direction of the steepest descent (or ascent) in the M-dimensional parameter space for the computed cost-function $Q(A)$; and (iii) set the next current conformation $\Lambda_c$ by incrementing the previous current conformation $\Lambda_c$ along said determined direction. In an example embodiment, the sub-steps (ii) and (iii) of step **1008** can be implemented using stochastic gradient descent (SGD) or other suitable optimization method.

At step **1010**, controller **530** operates to generate appropriate control signals **532** and/or **534** to cause the M lasers to tune to the wavelengths corresponding to the next current conformation $\Lambda_c$ determined at step **1008**.

At step **1012**, controller **530** uses one or more convergence criteria to determine whether or not the current conformation $\Lambda_c$ is sufficiently close to $\Lambda_{opt}$. Such convergence criteria are well known, e.g., in the field SGD-based optimization. If it is determined that $\Lambda_c$ is sufficiently close to $\Lambda_{opt}$, then the processing of method **1000** is terminated. Otherwise, the processing of method **1000** is directed back to step **1002**.

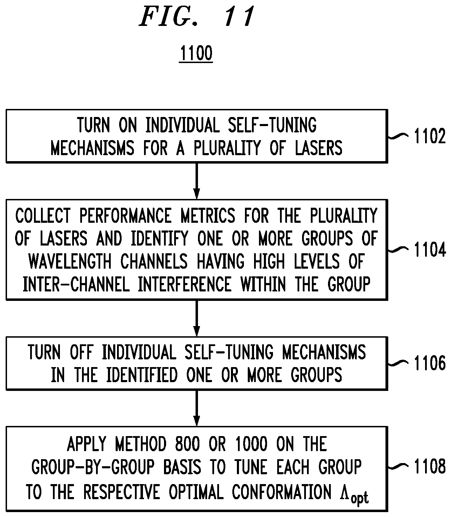

FIG. 11 shows a flowchart of a laser-tuning method **1100** that can be used in network **100** (FIG. 1) according to yet another embodiment. In an example embodiment, method **1100** may rely, in part, on the above-mentioned self-tuning mechanisms of individual optical transmitters **230** and the corresponding coherent optical receivers **220**. An example self-tuning mechanism suitable for this purpose is disclosed, e.g., in European Patent Application Publication EP 3531582 A1, which is incorporated herein by reference in its entirety.

At step **1102**, controller **530** uses control signals **532$_{j1}$** and/or **534$_{k1}$** to turn ON the self-tuning mechanisms of a plurality of lasers located at receivers **220** and/or transmitters **230**. The self-tuning mechanisms are then allowed to run for a period of time to achieve an initial conformation $\Lambda_0$.

At step **1104**, controller **530** collects pertinent performance metrics to identify one or more groups of wavelength channels having relatively high (e.g., above the selected threshold) levels of inter-channel interference within the group in conformation $\Lambda_0$.

At step **1106**, controller **530** uses control signals **532$_{j1}$** and/or **534$_{k1}$** to turn OFF the self-tuning mechanisms for the lasers corresponding to the groups identified at step **1104**.

At step **1108**, controller **530** uses method **800** or **1000** to tune the lasers within each of the groups identified at step **1104**.

According to an example embodiment disclosed above, e.g., in the summary section and/or in reference to any one or any combination of some or all of FIGs. 1-11, provided is an apparatus comprising: an electronic controller (e.g., **530**, FIG. 5) connectable (e.g., via **120**, **222**, **228**, FIG. 2) to a plurality of lasers (e.g., **56**, FIG. 3; **20**, FIG. 4) configured to generate light corresponding to a plurality of wavelength channels; and wherein the electronic controller is configured to tune the lasers to change output wavelengths (e.g., $\lambda_n$, FIGs. 3-4) thereof in response to transmission-performance feedback (e.g., **534$_{13}$**, **534$_{K3}$**, FIG. 5) received from two or more optical data receivers (e.g., **220**, FIG. 2) receiving optical data signals of two or more different wavelength channels of said plurality of wavelength channels.

In some embodiments of the above apparatus, the two or more optical data receivers comprise at least some (e.g., **56**, FIG. 3) of the plurality of lasers.

In some embodiments of any of the above apparatus, at least some (e.g., **20**, FIG. 4) of the plurality of lasers are parts of two or more optical data transmitters (e.g., **230**, FIG. 2) configured to generate the optical data signals of said two or more different wavelength channels.

In some embodiments of any of the above apparatus, the two or more optical data transmitters are optically connected to the two or more optical data receivers by way of one or more reconfigurable optical add/drop multiplexers (e.g., **210**, FIG. 2).

In some embodiments of any of the above apparatus, the plurality of wavelength channels is routed as an optical superchannel (e.g., **600**, FIG. 6).

In some embodiments of any of the above apparatus, the transmission-performance feedback is based on signal-to-noise-ratio measurements performed at the two or more optical data receivers.

In some embodiments of any of the above apparatus, the transmission-performance feedback is based on error-rate measurements performed at devices selected from the two or more optical data receivers and one or more optical monitors.

In some embodiments of any of the above apparatus, the transmission-performance feedback is based on inter-channel crosstalk measurements performed using devices selected from the two or more optical data receivers and one or more optical monitors.

In some embodiments of any of the above apparatus, the transmission-performance feedback is based on filtering-penalty measurements performed at devices selected from the two or more optical data receivers and one or more optical monitors, the filtering penalty being imposed on the optical data signals by one or more reconfigurable optical add/drop multiplexers (e.g., **210**, FIG. 2).

In some embodiments of any of the above apparatus, the electronic controller is capable of turning ON and OFF (e.g., at **1102**, **1106**, FIG. 11) a wavelength self-tuning mechanism of an individual wavelength channel of said plurality of wavelength channels.

In some embodiments of any of the above apparatus, the plurality of lasers includes at least three lasers.

In some embodiments of any of the above apparatus, the electronic controller is configured to tune the lasers based on a cost function computed using the transmission-performance feedback, the cost function (e.g., $Q(\Lambda)$) being responsive to transmission performance of the two or more different wavelength channels.

In some embodiments of any of the above apparatus, the electronic controller is further configured to tune the lasers using an iterative optimization algorithm applied to the cost function. In an example embodiment, the iterative optimization algorithm may be selected from one or more of interior-point, trust-region, and Sequential Quadratic Programming methods, and/or other suitable state-of-the art optimization methods.

In some embodiments of any of the above apparatus, the iterative optimization algorithm comprises stochastic gradient descent applied to the cost function.

In some embodiments of any of the above apparatus, the transmission performance of a wavelength channel includes one or more of: a signal-to-noise ratio; an error rate; an optical-filtering penalty; and a level of crosstalk with one or more other wavelength channels.

In some embodiments of any of the above apparatus, the electronic controller is configured to send an alarm message (e.g., **526**, FIG. 5) based on a comparison of a selected transmission-performance parameter with a fixed threshold value.

While this disclosure includes references to illustrative embodiments, this specification is not intended to be construed in a limiting sense. Various modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements. The same type of distinction applies to the use of terms "attached" and "directly attached," as applied to a description of a physical structure. For example, a relatively thin layer of adhesive or other suitable binder can be used to implement such "direct attachment" of the two corresponding components in such physical structure.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

A person of ordinary skill in the art would readily recognize that some steps of some of the above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The description and drawings merely illustrate the principles of the disclosure. It will thus be appreciated that those of ordinary skill in the art will be able to devise various arrangements that, although not explicitly described or shown herein, embody the principles of the disclosure and are included within its spirit and scope. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and embodiments of the disclosure, as well as specific examples thereof, are intended to encompass equivalents thereof.

The functions of the various elements shown in the figures, including any functional blocks labeled as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

As used in this application, the term "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

**Claims**

1. An apparatus comprising:

   an electronic controller (530) connectable to a plurality of lasers (56, 20) configured to generate light corresponding to a plurality of wavelength channels; and
   wherein the electronic controller is configured to tune the lasers to change output wavelengths thereof in response to transmission-performance feedback ($534_{13}$, $534_{K3}$) received from two or more optical data receivers (220) receiving optical data signals of two or more different wavelength channels of said plurality of wavelength channels.

2. The apparatus of claim 1, wherein the two or more optical data receivers comprise at least some (56) of the plurality of lasers.

3. The apparatus of claim 1, wherein at least some (20) of the plurality of lasers are parts of two or more optical data transmitters (230) configured to generate the optical data signals of said two or more different wavelength channels.

4. The apparatus of claim 3, wherein the two or more optical data transmitters are optically connected to the two or more optical data receivers by way of one or more reconfigurable optical add/drop multiplexers (210).

5. The apparatus of claim 1, wherein the plurality of wavelength channels is routed as an optical superchannel (600).

6. The apparatus of claim 1, wherein the transmission-performance feedback is based on signal-to-noise-ratio measurements performed at the two or more optical data receivers.

7. The apparatus of claim 1, wherein the transmission-performance feedback is based on error-rate measurements performed at the two or more optical data receivers.

8. The apparatus of claim 7, wherein the transmission-performance feedback is further based on error-rate measurements performed at one or more optical monitors.

9. The apparatus of claim 1, wherein the transmission-performance feedback is based on inter-channel crosstalk measurements performed using the two or more optical data receivers.

10. The apparatus of claim 9, wherein the transmission-performance feedback is further based on inter-channel crosstalk measurements performed using one or more optical monitors.

11. The apparatus of claim 1, wherein the transmission-performance feedback is based on filtering-penalty measurements performed at some of the two or more optical data receivers, the filtering penalty being imposed on the optical data signals by one or more reconfigurable optical add/drop multiplexers (210).

12. The apparatus of claim 11, wherein the transmission-performance feedback is further based on filtering-penalty measurements performed at one or more optical monitors.

13. The apparatus of claim 1, wherein the electronic controller is capable of turning ON and OFF a wavelength self-tuning mechanism of an individual wavelength channel of said plurality of wavelength channels.

14. The apparatus of claim 1, wherein the plurality of lasers includes at least three lasers.

15. The apparatus of claim 1, wherein the electronic controller is configured to tune the lasers based on a cost function computed using the transmission-performance feedback, the cost function being responsive to transmission performance of the two or more different wavelength channels.

16. The apparatus of claim 15, wherein the electronic controller is further configured to tune the lasers using an iterative optimization algorithm applied to the cost function.

17. The apparatus of claim 16, wherein the iterative optimization algorithm comprises stochastic gradient descent applied to the cost function.

**18.** The apparatus of claim 15, wherein the transmission performance of a wavelength channel includes one or more of: a signal-to-noise ratio; an error rate; an optical-filtering penalty; and a level of crosstalk with one or more other wavelength channels.

**19.** The apparatus of claim 1, wherein the electronic controller is configured to send an alarm message (526) based on a comparison of a selected transmission-performance parameter with a fixed threshold value.

FIG. 1

100

EP 3 866 360 A1

*FIG. 2*

200

*FIG. 3*

<u>220<sub>n</sub></u>

*FIG. 4*

<u>230<sub>n</sub></u>

EP 3 866 360 A1

*FIG. 5*

<u>500</u>

| NETWORK MANAGEMENT | ～510 |

～526

| NETWORK TOPOLOGY | ～520 |

～528    ～522

| LASER-TUNING CONTROLLER | ～530 |

$532_1$    $532_J$
$532_{11}$    $532_{12}$    $532_{J2}$
$532_{J1}$

$534_1$    $534_K$
$534_{13}$    $534_{K3}$
$534_{11}$    $534_{12}$    $534_{K2}$
$534_{K1}$

*FIG. 6*

<u>600</u>

610    $620_1$    $620_2$    $620_3$    $620_4$

$\Delta\lambda$

618    $\lambda_1$    $\lambda_2$    $\lambda_3$    $\lambda_4$    622

WAVELENGTH

*FIG. 7A*
701

*FIG. 7B*
702

*FIG. 7C*
703

*FIG. 7D*
704

*FIG. 7E*
705

## *FIG. 8*

800

```
┌─────────────────────────────────────┐
│ DEFINE A SET {Λp} OF CONFORMATIONS TO │── 802
│ BE TESTED FOR A PLURALITY OF LASERS  │
└─────────────────────────────────────┘
                    │
                    ▼
┌─────────────────────────────────────┐
│              SELECT p               │── 804
└─────────────────────────────────────┘
                    │
                    ▼
┌─────────────────────────────────────┐
│   TUNE THE PLURALITY OF LASERS TO   │
│   GENERATE OUTPUT WAVELENGTHS       │── 806
│   CORRESPONDING TO CONFORMATION Λp  │
└─────────────────────────────────────┘
                    │
                    ▼
┌─────────────────────────────────────┐
│    COLLECT INDIVIDUAL-CHANNEL       │
│       PERFORMANCE METRICS           │── 808
│   CORRESPONDING TO CONFORMATION Λp  │
└─────────────────────────────────────┘
                    │
                    ▼
           ╱─────────────────╲
    YES   ╱      ANY p         ╲
  ◄──────◄    NOT PREVIOUSLY    ►── 810
          ╲      SELECTED?      ╱
           ╲─────────────────╱
                    │ NO
                    ▼
┌─────────────────────────────────────┐
│     DETERMINE AN OPTIMAL SET        │
│   Λopt OF OUTPUT WAVELENGTHS        │── 812
│   FOR THE PLURALITY OF LASERS       │
└─────────────────────────────────────┘
                    │
                    ▼
┌─────────────────────────────────────┐
│    TUNE THE PLURALITY OF LASERS     │
│  TO GENERATE OUTPUT WAVELENGTHS     │── 814
│     CORRESPONDING TO Λopt           │
└─────────────────────────────────────┘
```

EP 3 866 360 A1

FIG. 9A

SNR C1 (dB)

optimal zone for C1

SHIFT C1 (GHz)

SHIFT C2 (GHz)

FIG. 9B

SNR C2 (dB)

optimal zone for C2

SHIFT C1 (GHz)

SHIFT C2 (GHz)

FIG. 9C

abs(SNRC2−SNRC1) (dB)

'balanced' SNRs

SHIFT C1 (GHz)

SHIFT C2 (GHz)

FIG. 9D

0.5(SNRC2+SNRC1) (dB)

optimal balance

$\Lambda_{opt}$

SHIFT C1 (GHz)

SHIFT C2 (GHz)

## *FIG. 10*

<u>1000</u>

A PLURALITY OF LASERS GENERATE OUTPUT WAVELENGTHS CORRESPONDING TO CONFORMATION $\Lambda_c$ — 1002

DEFINE FOR THE PLURALITY OF LASERS A SET $\{\Lambda_p\}$ OF CONFORMATIONS NEAR CONFORMATION $\Lambda_c$ — 1004

SAMPLE CONFORMATIONS FROM THE SET $\{\Lambda_p\}$ — 1006

DETERMINE A NEW CONFORMATION $\Lambda_c$, e.g., USING SGD — 1008

TUNE THE PLURALITY OF LASERS TO GENERATE OUTPUT WAVELENGTHS CORRESPONDING TO THE NEW CONFORMATION $\Lambda_c$ — 1010

NO ◆ OPTIMIZATION CONVERGED? — 1012

YES

END

*FIG. 11*

1100

TURN ON INDIVIDUAL SELF-TUNING
MECHANISMS FOR A PLURALITY OF LASERS ⟶ 1102

COLLECT PERFORMANCE METRICS FOR THE PLURALITY
OF LASERS AND IDENTIFY ONE OR MORE GROUPS OF
WAVELENGTH CHANNELS HAVING HIGH LEVELS OF
INTER-CHANNEL INTERFERENCE WITHIN THE GROUP ⟶ 1104

TURN OFF INDIVIDUAL SELF-TUNING MECHANISMS
IN THE IDENTIFIED ONE OR MORE GROUPS ⟶ 1106

APPLY METHOD 800 OR 1000 ON THE
GROUP-BY-GROUP BASIS TO TUNE EACH GROUP
TO THE RESPECTIVE OPTIMAL CONFORMATION $\Lambda_{opt}$ ⟶ 1108

Europäisches
Patentamt

European
Patent Office

Office européen
des brevets

# EUROPEAN SEARCH REPORT

Application Number

EP 20 31 5018

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/022034 A1 (ERICSSON TELEFON AB L M [SE]) 19 February 2015 (2015-02-19) * the whole document * | 1-19 | INV. H04J14/02 |
| X | US 2004/037569 A1 (KAMALOV VALEY F [US] ET AL) 26 February 2004 (2004-02-26)<br><br>* page 3, paragraph 27 - paragraph 29 *<br>* page 4, paragraph 33 - paragraph 38 *<br>* page 4, paragraph 40 - page 5, paragraph 42 *<br>* page 5, paragraph 46 *<br>* page 6, paragraph 53 *<br>* claims 1,7,10,14; figures 1-3 * | 1-6,9, 10,14, 18,19 | |
| X | XIANG ZHOU ET AL: "400G WDM Transmission on the 50 GHz Grid for Future Optical Networks", JOURNAL OF LIGHTWAVE TECHNOLOGY, IEEE, USA, vol. 30, no. 24, 1 December 2012 (2012-12-01), pages 3779-3792, XP011486089, ISSN: 0733-8724, DOI: 10.1109/JLT.2012.2206013 * D. End-to-End Carrier Frequency Control; III. 50 GHz SPACED 400G TRANSMISSION EXPERIMENTS; IV. DISCUSSION; V. CONCLUSSION; * | 1 | |

**TECHNICAL FIELDS SEARCHED (IPC)**

H04J
H04B

The present search report has been drawn up for all claims

| Place of search | Date of completion of the search | Examiner |
|---|---|---|
| Munich | 21 September 2020 | Carballo da Costa, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 3 866 360 A1

## ANNEX TO THE EUROPEAN SEARCH REPORT
## ON EUROPEAN PATENT APPLICATION NO.

EP 20 31 5018

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2020

| Patent document cited in search report | Publication date | Patent family member(s) | Publication date |
|---|---|---|---|
| WO 2015022034 A1 | 19-02-2015 | EP 3033846 A1<br>US 2016191195 A1<br>WO 2015022034 A1 | 22-06-2016<br>30-06-2016<br>19-02-2015 |
| US 2004037569 A1 | 26-02-2004 | NONE | |

EPO FORM P0459

For more details about this annex : see Official Journal of the European Patent Office, No. 12/82

**EP 3 866 360 A1**

**REFERENCES CITED IN THE DESCRIPTION**

**Patent documents cited in the description**

- US 7733929 B
- US 7286771 B
- US 6950450 B
- US 7965950 B
- US 20110229137
- US 8391709 B
- US 8300995 B
- US 8190027 B
- US 8126330 B
- US 8041213 B
- US 7343066 B
- EP 3531582 A1